# EUROPÄISCHE PATENTSCHRIFT

(11) **EP 1 735 370 B1**
(45) Veröffentlichungstag und Bekanntmachung des Hinweises auf die Patenterteilung: **04.07.2007**
(21) Anmeldenummer: 05733302.3
(22) Anmeldetag: 14.04.2005
(51) Int. Cl.: C08J 3/03, C08L 83/04

(54) **VERFAHREN ZUR KONTINUIERLICHEN HERSTELLUNG VON SIILICON EMULSIONEN**
PROCESS FOR THE CONTINUOUS PREPARATION OF SILICONE EMULSIONS
PROCEDE POUR PREPARER EN CONTINU DES EMULSIONS DE SILICONE

(30) Priorität: 15.04.2004 DE 102004018283
(43) Veröffentlichungstag der Anmeldung: 27.12.2006
(73) Patentinhaber: Wacker Chemie AG, 81737 München (DE)
(72) Erfinder: SCHRÖCK, Robert, 84503 Altötting (DE); SCHNEIDER, Otto, 84489 Burghausen (DE)
(74) Vertreter: Fritz, Helmut
(86) Internationale Anmeldenummer: PCT/EP2005/003960
(87) Internationale Veröffentlichungsnummer: WO 2005/100453

(56) Entgegenhaltungen:
- EP-A- 0 915 122
- WO-A-02/42360

## Beschreibung

Die Erfindung betrifft ein Verfahren zur kontinuierlichen Herstellung von wässrigen Silicon Emulsionen, wobei das Verfahren über die Drücke und Temperaturen geregelt wird, die direkt nach den Mischern gemessen werden.

Silicon Emulsionen sind als milchig-weiße Makroemulsionen in Form w/o oder o/w Emulsionen sowie als opake bis transparente Mikroemulsionen im Handel. Es sind Mischungen aus zumindest einem wasserunlöslichen Siliconöl, -harz oder -elastomer, mindestens einem Emulgator und Wasser. Zur Herstellung der Emulsion werden diese Komponenten unter Anwendung von z.B. Wärme und Kälte, mechanischer Scherung, die mittels engen Spalten in Mischern erzeugt werden kann, miteinander vermischt und dispergiert.

Die Silicon-Komponente der Emulsion kann in einer vorgeschalteten Reaktion außerhalb der Emulgiereinheit hergestellt werden und dann in der Emulgiereinheit dispergiert werden. Oder die Silicon-Komponente der Emulsion kann in der Emulgiereinheit selbst erzeugt werden (in-situ- Herstellung). Kennzeichnend für die in-situ-Herstellung ist, dass kurz vor, während oder kurz nach der Emulsionsherstellung eine chemische Reaktion abläuft.

Typische Reaktionen zur in-situ-Herstellung bzw. Polymerisation der Silicon-Komponente sind alle in der Siliconchemie angewendeten Reaktionen, die zu Kettenverlängerung oder Äquilibrierung führen, wie z.B. Polymerisation-, Kondensations-, oder Polyadditionsreaktionen.

Bei der Herstellung von Silicon-Emulsionen unter Anwendung von Scherung wird typischerweise zuerst das Silicon mit mindestens einem Emulgator und einer kleinen Menge Wasser vermischt und einer hohen Scherung, z.B. in einem Rotor-Stator Mischer mit engen Spalten, ausgesetzt. Dabei entsteht typischerweise eine w/o-Emulsion mit sehr hoher Viskosität, die als so genannte "steife Phase" bezeichnet wird. Die Viskosität dieser steifen Phase ist sehr stark scherabhängig. Diese steife Phase wird dann langsam mit Wasser bis zum Inversionspunkt verdünnt. Am Inversionspunkt wird aus der w/o eine o/w Emulsion. Die Ausbildung der steifen Phase, sowie die Art der Verdünnung mit Wasser bis zur gewünschten Endkonzentration der Emulsion bestimmt die Qualität der Emulsion. Unter Qualität der Emulsion sind insbesondere die Teilchengröße, die Verteilung der Teilchengröße, die Lagerstabilität sowie die Toleranz der Emulsion gegenüber Erwärmung und/oder Abkühlung, Erschütterungen, Änderung des pH-Wertes, Änderung des Salzgehaltes usw. zu verstehen.

Die o.g. Herstellung von Siliconemulsionen mittels Scherung kann Batch-weise oder kontinuierlich erfolgen.

US 5 806 975 beschreibt eine Apparatur und die Methode, um hochviskose Silicone in einem Extruder-artigen Gerät zu emulgieren.

US 5 563 189 beansprucht die 2-stufige, kontinuierliche Emulsionsherstellung, wobei in der ersten Stufe eine Emulsion mit hohem Festgehalt hergestellt wird, die dann in einem 2. Schergerät mit zusätzlichem Wasser auf die gewünschte Endkonzentration verdünnt wird.

EP 874 017 beansprucht eine Methode zur Herstellung von Silicon-in-Wasser-Emulsionen, wobei zumindest ein Polysiloxan, ein weiteres Siloxan das mit dem zuerst genannten mittels Kettenverlängerung reagiert sowie einem Metallkatalysator dafür, ferner ein Emulgator und Wasser kontinuierlich vermischt und emulgiert werden.

WO 02/42360 beschreibt die kontinuierliche Herstellung von Emulsionen mittels eines oder mehreren scherenden Mixern, wobei das Siloxan, der Emulgator und das Wasser zur Ausbildung einer steifen Phase dem Mixer durch eine Leitung zugeführt wird und der Druck am Einlass des Mixers auf 20% konstant gehalten wird.

Gegenstand der Erfindung ist ein Verfahren zur kontinuierlichen Herstellung von wässrigen Emulsionen, die Organosiliciumverbindung (A), Emulgator (B) und Wasser (C) umfassen, bei dem jeweils ein Teil der Komponenten Organosiliciumverbindung (A), Emulgator (B) und Wasser (C) kontinuierlich einem ersten hochscherenden Mischer zugeführt werden in welchem eine hochviskose Phase einer Siliconemulsion gebildet wird,
und in einem zweiten hochscherenden Mischer weitere Komponenten, die ausgewählt werden aus Organosiliciumverbindung (A), Emulgator (B) und Wasser (C) zugemischt werden,
wobei das Verfahren über die Drücke und Temperaturen geregelt wird, die direkt nach den Mischern gemessen werden.

Es wurde gefunden, dass für die Qualität der Emulsionen von Organosiliciumverbindungen der Druck und die Temperatur nach den hochscherenden Mischern bestimmend sind und durch die Regelung die Qualität der hergestellten Emulsionen deutlich verbessert werden kann. Die Regelung führt bei Mikroemulsionen zu klareren Produkten mit kleinen Teilchengrößen. Bei Makroemulsionen werden deutlich geringere Teilchengrößen und verbesserte Lager- und Verdünnungsstabilitäten erreicht. Mit der Temperatursteuerung ist eine Steuerung der Teilchengrößen möglich. Dieser Effekt wird durch die Druckregelung unterstützt.

Der Druck und die Temperatur werden für die jeweiligen Produkte auf einen Zielwert geregelt. Die Regelung des Drucks erfolgt bevorzugt durch eine Druckhaltung nach dem zweiten hochscherenden Mischer und durch die Drehzahl bzw. Geometrie der hochscherenden Mischer. Die hochscherenden Mischer haben je nach Drehzahl eine unterschiedliche Förderleistung, was den Druck in der nachfolgenden Leitung beeinflusst. Die Regelung der Temperatur erfolgt bevorzugt durch die Temperatur der Rohstoffe und die Drehzahl der Mischer. Je höher die Drehzahlder Mischer desto mehr Energie in Form von Mischenergie und Wärme wird zugeführt und umgekehrt. Als hochscherende Mischer sind beispielsweise geeignet Rotor-Stator-Mischer, Hochgeschwindigkeitsrührer/Dissolver, Kolloidmühlen, Mikrokanäle, Membrane, Hochdruckhomogenisatoren und Strahldüsen, insbesondere Rotor-Stator-Mischer.

Für die Drücke und Temperaturen nach den Mischern ergeben sich je nach Produkt und dessen Viskosität unterschiedliche Werte. Die Drücke betragen vorzugsweise 1 bis 10 bar. Die Temperaturen betragen vorzugsweise 5°C bis 100°C. Vorzugsweise sind Druck und die Temperatur im bzw. hinter dem ersten hochscherenden Mischer am höchsten, der die hochviskose Phase erzeugt.

Im ersten hochscherenden Mischer werden vorzugsweise mindestens 50, vorzugsweise mindestens 70 Gew.-% der Organosiliciumverbindung (A) zugemischt. Im ersten hochscherenden Mischer werden vorzugsweise mindestens 60, vorzugsweise mindestens 80 Gew.-% des Emulgators (B) zugemischt.

Im Verfahren werden dem ersten hochscherenden Mischer Organosiliciumverbindung (A), Emulgator (B) und Wasser (C) z.B. mit stetig fördernden Pumpen wie Zentrifugalpumpen, Zahnradpumpen, Drehkolben- oder Drehspindelpumpen zugeführt. Für manche Emulsionen kann es vorteilhaft sein, dem ersten hochscherenden Mischer bereits ein Gemisch von Emulgator (B) und Wasser (C) zuzuführen. Dazu kann ein weiterer hochscherender Mischer vor dem ersten hochscherenden Mischer angeordnet werden. Weiterhin können nach dem zweiten hochscherenden Mischer weitere Mischer, vorzugsweise ein oder zwei Mischer die Emulsion verdünnen und fertig konfektionieren.

Neben Organosiliciumverbindung (A), Emulgator (B) und Wasser (C) können weitere Zusatzstoffe (Z) dem ersten oder zweiten hochscherenden Mischer zugeführt werden oder in weiteren Mischern eingearbeitet werden. Vorzugsweise werden Zusatzstoffe (Z) im zweiten hochscherenden Mischer oder in weiteren Mischern eingearbeitet. Es ist auch möglich dem ersten hochscherenden Mischer, Mischungen von (A), (B) und (C) und sonstigen Zusatzstoffen (Z) zuzuführen, die z.B. in einem Vorratstank vorgemischt werden.

Für bestimmte Produkte ist es vorteilhaft, einen weiteren hochscherenden Mischer nach dem zweiten hochscherenden Mischer in den Produktstrom einzubauen um eine höhere Scherung der Emulsionen zu erreichen. Auch kann der Mischer zur Herstellung einer Voremulsion, Lösung oder Mischung von z.B. nicht vollständig wasserlöslichen Emulgatoren oder Verdickern mit Wasser verwendet werden.

In dem Verfahren können alle Silane und Organopolysiloxane als Organosiliciumverbindung (A) sowie deren Mischungen, Lösungen oder Dispersionen eingesetzt werden. Beispiele sind lineare Organopolysiloxane und Siliconharze. Unter Siliconharzen versteht man Produkte die nicht nur mono- und difunktionelle Siliciumeinheiten enthalten sondern auch tri- und tetrafunktionelle Siliciumeinheiten aufweisen.

Die erfindungsgemäß hergestellten Emulsionen haben einen Gehalt an Organosiliciumverbindung (A) von mindestens 1% bis 98%, bevorzugt 5% bis 90%, besonders bevorzugt 9 bis 80%. Die Teilchengrößen variieren von 1 nm bis 1000 µm, bevorzugt von 5 nm bis 300 µm, besonders bevorzugt 10 nm bis 200 µm. Die pH-Werte können von 1 bis 14 variieren, bevorzugt 2 bis 10, besonders bevorzugt 3 bis 9.

Organosiliciumverbindung (A) ist vorzugsweise bei 25°C flüssig und weist vorzugsweise Viskositäten von 0,5 bis 500 000 mPa·s, insbesondere 2 bis 80 000 mPa·s auf.

Beispiele für Organosiliciumverbindungen sind Organosiliciumverbindungen, die Einheiten der allgemeinen Formel I

AₐR_{b}SiX_{c}O_{[4-(a+b+c)]/2} (I),

enthalten, wobei
- **R**: ein Wasserstoffatom oder einen einwertigen, zweiwertigen oder dreiwertigen Kohlenwasserstoffrest mit 1 bis 200 Kohlenstoffatomen, der mit Halogen-, Amin-, Ammonium-, Mercapto-, Acrylat- oder Maleinimidgruppen substituiert sein kann,
- **X**: ein Chloratom, einen Rest der Formel -O-, wobei als Ausgleich der Ladungen Protonen und/oder organische bzw. anorganische ionische Substanzen vorhanden sein können, einen Rest der allgemeinen Formel -OR¹ oder einen Rest der allgemeinen Formel II

-(R²)ₕ-[OCH₂CH₂]ₑ[OC₃H₆]_{f}[OC₄H₈)₄]_{g}OR³ (II),
wobei
- **R¹**: ein Wasserstoffatom oder einen Kohlenwasserstoffrest mit 1 bis 200 Kohlenstoffatomen, der durch ein oder mehrere gleiche oder verschiedene Heteroatome, die ausgewählt werden aus O,- S, N und P, unterbrochen sein kann,
- **R²**: einen zweiwertigen Kohlenwasserstoffrest mit 1 bis 200 Kohlenstoffatomen, der durch ein oder mehrere Gruppen der Formeln -C(O)-, -C(O)O-, -C(O)NR¹, -NR¹-, -N+HR¹-, -O-, -S- unterbrochen und/oder mit F, Cl oder Br substituiert sein kann,
- **R³**: eine Bedeutung von R¹ haben kann, oder einen Rest der Formeln -C(O)R¹ oder -Si(R¹)₃,
- **A**: einen Rest der allgemeinen Formel IV

- R⁴(B)_{z} (IV),
wobei
- **R⁴**: einen zwei- drei- oder vierwertigen Kohlenwasserstoffrest mit 1 bis 200 Kohlenstoffatomen je Rest, der durch ein oder mehrere Gruppen der Formeln -C(O)-, -C(O)O-,-C(O)NR⁵, -NR⁵-, -N⁺HR⁵-, -N⁺R⁵R⁵-, -O-, -S-, -(HO)P(O)- oder -(NaO)P(O)- unterbrochen und/oder mit F, Cl oder Br substituiert sein kann, wobei
- **R⁵**: ein Wasserstoffatom oder einen Kohlenwasserstoffrest mit 1 bis 200 Kohlenstoffatomen je Rest, der durch ein oder mehrere Gruppen der Formeln -C(O)-, -C (O) O-, -C(O)NR⁵-,-NR⁵-, -N-HR⁵-, -N⁺R⁵R⁵-, -0- oder -S- unterbrochen und/ oder mit F, Cl oder Br substituiert sein kann,
- **B**: eine Bedeutung von R⁵ haben kann oder einen Rest, der ausgewählt wird aus -COO-, -SO₃-, -OPO₃H_{y^{(2-y)}}-, -N⁺R⁵R⁵R⁵,-P-R⁵R⁵R⁵, -NR⁵R⁵, -OH, -SH, E, Cl, Br, -C (O) H, -COOH, -SO₃H, C₆H₄-OH und -CₘF₂ₘ₊₁, 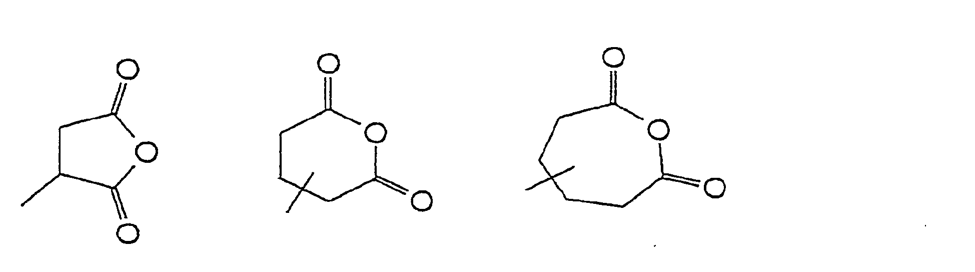 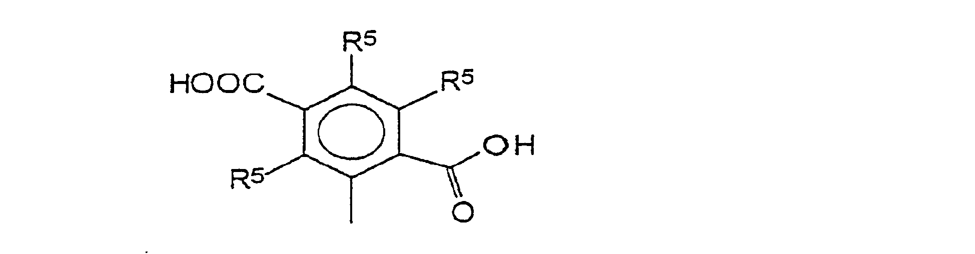 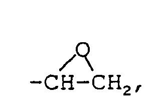 -C(O)-CR¹=CH₂, -O-C(O)-CR¹=CH₂, -C₆H₄-(CH₂)ₓ-CR¹=CH₂, 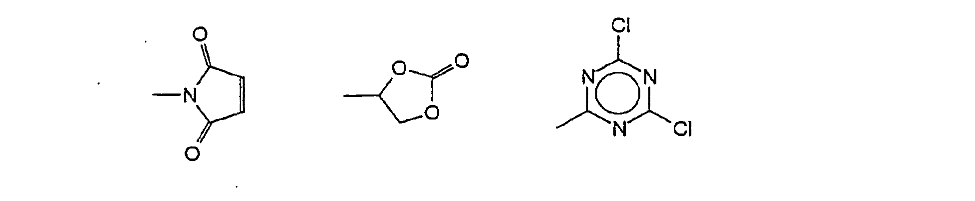
- **x**: eine ganze Zahl von 1-20,
- **y**: die Werte 0 oder 1,
- **z**: je nach Wertigkeit von **R⁴** die Werte 1, 2 oder 3,
- **h**: die Werte 0 oder 1,
- m: eine ganze Zahl von 1-20,
- **a, b und c**: jeweils die Werte 0, 1, 2, 3, oder 4 und die Summe **a + b + c** kleiner oder gleich 4 und
- **e, f und g**: jeweils eine ganze Zahl von 0-200 bedeuten, mit der Maßgabe, daß die Summe **e + f + g** > 1 ist.

Als Ausgleich der Ladungen in den Resten **A, R** und **X** können gegebenenfalls Protonen und/oder organische bzw. anorganische ionische Substanzen vorhanden sein, wie z.B. Alkalimetall-, Erdalkalimetall-, Ammonium-Ionen, Halogenid-, Sulfat-, Phosphat-, Carboxylat-, Sulfonat-, Phosphonat-Ionen. Weiterhin können die Organosiliciumverbindungen gegebenenfalls Einheiten der allgemeinen Formeln (V) und (VI) enthalten,

O_{(4-i-k-1)/2}RᵢXₖSi-A¹-SiXₖRᵢO_{(4-i-k-1)/2} (V),

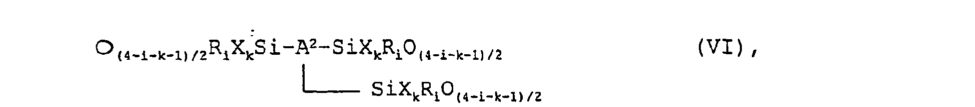

wobei
- **A²**: einen dreiwertigen Kohlenwasserstoffrest mit 1 bis 200 Kohlenstoffatomen bedeutet, der durch Reste der Formeln-C (O) -, -C (O) O-, -C(O)NR₅, -NR⁵-, -N⁺HR⁵-, -N⁺R⁵R⁵-, -O-, -S-, -N- oder -N⁺R⁵- unterbrochen und/oder mit F, Cl oder Br substituiert sein kann,
- **A¹**: einen zweiwertigen Rest **R²** darstellt,
- **i** und **k**: jeweils die Werte 0, 1, 2 oder 3 bedeuten, mit der Maßgabe **i + k** ≤ 3 und
- **R** und **X**: die oben angegebenen Bedeutungen haben.

Die vorstehend aufgeführten Kohlenwasserstoffreste **R, R¹, R²**, **R³, R⁴, R⁵, A¹** und **A²** können gesättigt, ungesättigt, linear, cyclisch, aromatisch oder nichtaromatisch sein.

Beispiele für Kohlenwasserstoffreste R sind Alkylreste, wie der Methyl-, Ethyl-, n-Propyl-, iso-Propyl-, 1-n-Butyl-, 2-n-Butyl- , iso-Butyl-, tert.-Butyl-, n-Pentyl-, iso-Pentyl-, neo-Pentyl- , tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.
Bevorzugt sind das Wasserstoffatom oder der Methyl-, Ethyl-, Octyl- und Phenylrest, besonders bevorzugt sind das Wasserstoffatom oder der Methyl-und Ethylrest.

Beispiele für halogenierte Reste **R** sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Rest R¹ sind die für Rest **R** gleich Alkylreste angegebenen Beispiele sowie der Methoxyethyl- und der Ethoxyethylrest, wobei es sich bei Rest **R¹** bevorzugt um Alkylreste mit 1 bis 50 Kohlenstoffatomen, die durch Sauerstoffatome unterbrochen sein können, besonders bevorzugt um den Methyl- und den Ethylrest handelt.

Beispiele für organische oder anorganische Substanzen zum Ausgleich der Ladungen für X = -O- sind,
Alkali- und Erdalkaliionen, Ammonium- und Phosphoniumionen sowie ein- zwei- oder dreiwertige Metallionen, bevorzugt sind Alkaliionen, besonders bevorzugt Na⁺ und K⁺.

Beispiele für Reste **X** sind der Methoxy- bzw. der Ethoxyrest und der allgemeinen Formel (II), wie
- CH₂)₃-(OCH₂CH₂)₃-OCH₃, -(CH₂)₃-(OCH₂CH₂)₆-OCH₃,
-(CH₂)₃- (OCH₂CH₂) ₃₅-OCH₃,
-(CH₂)₃- (OCH (CH₃) CH₂) ₃-OCH₃, -(CH₂) ₃- (OCH (CH₃) CH₂)₆-OCH₃,
-(CH₂)₃-(OCH(CH₃)CH₂)₃₅-OCH₃, -(CH₂)₃-(OCH₂CH₂)₃- (OCH (CH₃) CH₂) ₃-OCH₃,
-(CH₂)₃- (OCH₂CH₂)₆- (OCH (CH₃) CH₂) ₆-OCH₃,
-(CH₂)₃- (OCH₂CH₂) ₃₅- (OCH (CH₃) CH₂) ₃₅-OCH₃,
-(CH₂) ₃- (OCH₂CH₂) ₃-OSi (CH₃) ₃, -(CH₂)₃- (OCH₂CH₂) ₆-OSi (CH₃)₃,
-(CH₂) ₃- (OCH₂CH₂) ₃₅-OSi (CH₃)₃,
-(CH₂) ₃- (OCH₂CH₂) ₃-OC (O) CH₃, -(CH₂) ₃- (OCH₂CH₂) ₆-OC (O) CH₃,
-(CH₂) ₃- (OCH₂CH₂) ₃₅-OC (O) CH₃,
-(OCH₂CH₂)₃-OH, -(OCH₂CH₂)₆-OH, -(OCH₂CH₂)₃₅-OH,
-(OCH(CH₃)CH₃)₃-OH, -(OCH(CH₃)CH₃)₆-OH,
-(OCH(CH₃)CH₂)₃₅-OH, -(OCH₂CH₂)₃-(OCH(CH₃)CH₂)₃-OH,
- (OCH₂CH₂) ₆- (OCH (CH₃) CH₂) ₆-OH,
- (OCH₂CH₂) ₃₅- (OCH(CH₃) CH₂) ₃₅-OH;
-(OCH₂CH₂)₁₈-(O(CH₂)₄)₁₈-OH
-(OCH₂CH₂)₃-OCH₃, -(OCH₂CH₂)₆-OCH₃, -(OCH₂CH₂)₃₅-OCH₃,
-(OCH(CH₃)CH₂)₃-OCH₃, -(OCH(CH₃)CH₂)₆-OCH₃,
-(OCH(CH₃)CH₂)₃₅-OCH₃, -(OCH₂H₂)₃-(OCH(CH₃)CH₂)₃-OCH₃,
- (OCH₂CH₂) ₆- (OCH (CH₃) CH₂) ₆-OCH₃,
- (OCH₂CH₂) ₃₅- (OCH (CH₃) CH₂) ₃₅-OCH₃,
- (OCH₂CH₂) ₃-OSi (CH₃) ₃, - (OCH₂CH₂) ₆-OSi (CH₃)₃,
- (OCH₂CH₂)₃₅-OSi (CH₃)₃,
- (OCH₂CH₂) ₃-OC (O) CH₃, - (OCH₂CH₂) ₆-OC (O) CH₃,
- (OCH₂CH₂) ₃₅-OC (O) CH₃,
- (OCH₂CH₂)₃-OH, -(OCH₂CH₂)₆-OH, -(OCH₂CH₂)₃₅-O
- (OCH (CH₃) CH₂) ₃-OH, - (OCH (CH₃) CH₂) ₆-OH,
- (OCH(CH₃)CH₂)₃₅-OH, -(OCH₂CH₂)₃-(OCH(CH₃)CH₂)₃-OH,
- (OCH₂CH₂)₆- (OCH (CH₃) CH₂) ₆-OH,
- (OCH₂CH₂)₃₅- (OCH(CH₃)CH₂)₃₅-OH und
- (OCH₂CH₂) ₁₈- (O (CH₂)₄)₁₈-OH.

Beispiele für Reste **R²** sind lineare oder verzweigte, substituierte oder unsubstituierte Kohlenwasserstoffreste mit vorzugsweise 2 bis 10 Kohlenstoffatomen, wobei gesättigte oder ungesättigte Alkylenreste bevorzugt sind und der Ethylen- oder der Propylenrest besonders bevorzugt sind.

Beispiele für Reste **R³** sind die für **R** gleich Alkylrest oder Arylrest angegebenen Beispiele und Reste der Formel -C(O)R¹ oder -Si(R¹)₃, wobei der Methyl-, Ethyl-, Propyl- und Butyl- sowie Trialkylsilyl- und -C(O)-Alkylrest bevorzugt und der Methyl, Butyl -, -C(O)-CH₃ und der Trimethylsilylrest besonders bevorzugt sind.

Beispiele für **R⁴** sind Reste der Formeln
-(CH₂)₃-
-(CH₂)₃-O-CH₂-
-(CH₂)₃-O-(CH₂-CH₂O)ₙ-
-(CH₂) ₃-O-CH₂-CH (OH) -CH₂-
-(CH₂)₃-NH-(CH₂)₂-
-(CH₂)₃-NH-C (O)-
-(CH₂)₃-NH-(CH₂)₂-C(O) -O-
-(CH₂)₃-NH-(CH₂)₂-C(O)-O-(CH₂)₂-
-(CH₂)₃-NH- (CR₂)₂-NH-C (O) -CH=CH-
-(CH₂)₃-NH-C(O)-CH=CH-
-(CH₂)₃-C₆H₄-

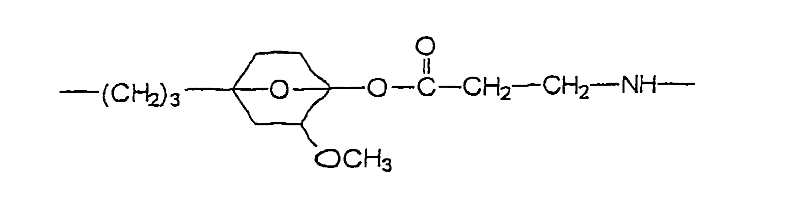

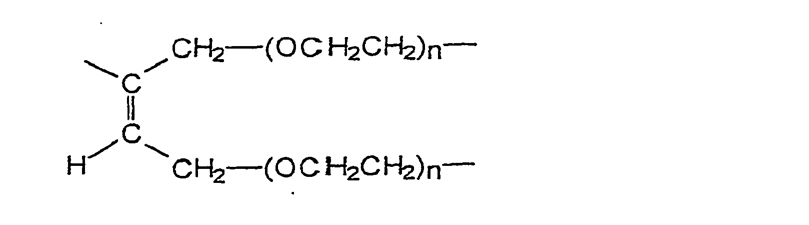

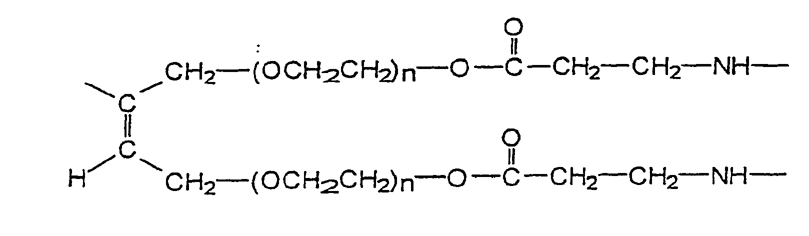

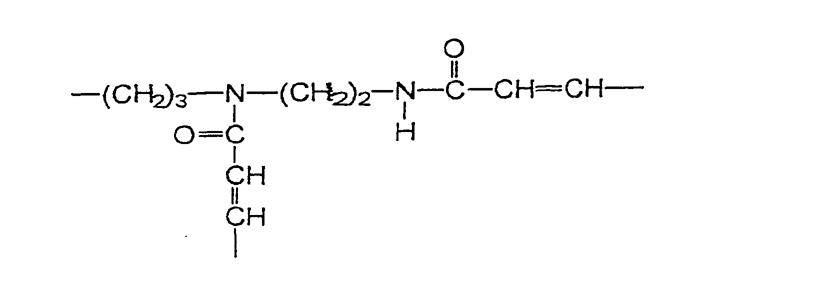

Bevorzugt für **R⁴** sind Reste der Formeln
-(CH₂)₃-
-(CH₂)₃-NH-(CH₂)₂-
-(CH₂)₃-O-CH₂-CH(OH)-CH₂-

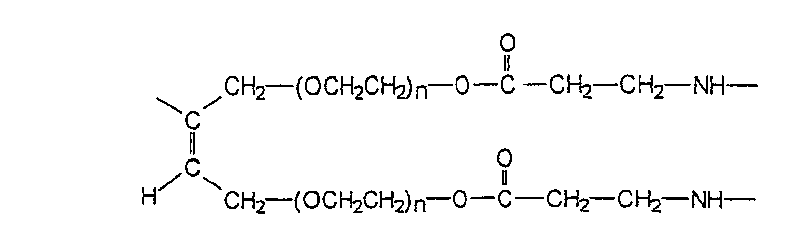

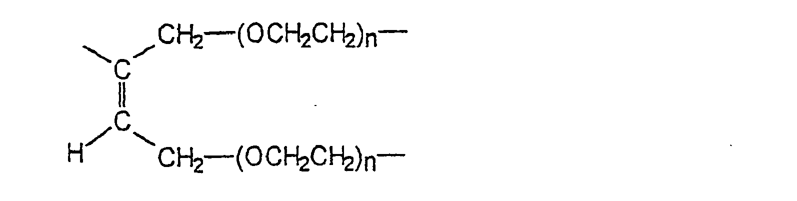

Besonders bevorzugt als **R⁴** sind -(CH₂)₃- und -(CH₂)₃-NH-(CH₂)₂- .

Beispiele für **R⁵** sind die vorstehend bei **R** aufgeführten Alkyl- und Arylreste und Reste der Formeln
-C (O) -CH₃
-(CH₂CH₂O)₃-CH₃, -(CH₂CH₂O)₆-CH₃, -(CH₂CH₂O)₃₅-CH₃,
-(CH(CH₃)CH₂O)₃-CH₃, -(CH(CH₃)CH₂O)₆-CH₃,
-(CH(CH₃)CH₂O)₃₅-CH₃, -(CH₂CH₂O)₃-(CH(CH₃)CH₂O)₃-CH₃,
-(CH₂CH₂O)₅-(CH₂-CH(CH₃) O)₅-CH₃,
-(CH₂CH₂O) ₁₀-(CH₂-CH (CH₃) O) ₁₀-CH₃,
-(CH₂CH₂O) ₃-Si (CH₃)₃, -(CH₂CH₂O) ₆-Si (CH₃)₃, -(CH₂CH₂O ₃₅-Si (CH₃)₃,
-(CH₂CH₂O)₅-(CH₂-CH (CH₃) O) ₅-Si (CH₃) ₃,
-(CH₂CH₂O) ₁₀-(CH₂-CH (CH₃) O) ₁₀-Si (CH₃)₃,
-(CH₂CH₂O)₃-C(O)CH₃, -(CH₂CH₂O)₆-C(O)CH₃, -(CH₂CH₂O)₃₅-C(O)CH₃,
-(CH₂CH₂O) ₅-(CH₂-CH (CH₃) O) ₅-C (O) CH₃,
-(CH₂CH₂O) ₁₀-(CH₂-CH (CH₃) O) ₁₀-C (O) CH₃,
-(CH₂CH₂O)₃-H, -(CH₂CH₂O)₆-H, -(CH₂CH₂O)₃₅-H,
-(CH (CH₃) CH₂O) ₃-H, -(CH (CH₃) CH₂O) ₆- H,
-(CH(CH₃)CH₂O)₃₅-H, -(CH₂CH₂O)₃-(CH (CH₃) CH₂O) ₃-H,
-(CH₂CH₂O) ₅-(CH₂-CH (CH₃) O) ₅-H,
-(CH₂CH₂O) ₁₀-(CH₂-CH (CH₃) O) ₁₀-H und
-(CH₂CH₂O)₁₈-((CH₂)₄O)₁₈-H.

Bevorzugt sind das Wasserstoffatom und die für **R** angegebenen Beispiele, besonders bevorzugt sind das Wasserstoffatom und Alkylreste.

Beispiele für Reste B sind -COONa, -SO₃Na, -COOH, -SH und insbesondere -OH, -NH₂, -NH-CH₃, -NH-(C₆H₁₁) und -N-(CH₂-CH=CH₂)₂, wobei -NH₂, -NH-CH₃ und -NH- (C₆H₁₁) besonders bevorzugt sind.

Beispiele für **A¹** sind lineare oder verzweigte, zweiwertige Alkylreste mit vorzugsweise 2 bis 20 Kohlenstoffatomen, oder Reste der Formeln
-(CH₂)₃-NH-(CH₂)₃-, -(CH₂)₃-NR⁵-(CH₂)₃-
-(CH₂)₃-(CH₂-CH₂O)_{f}-(CH₂) ₃-
-O-(CH₂-CH₂O)_{f}-

Beispiel für **A²** ist N[(CH₂)₃-]₃.

Organosiliciumverbindungen (A) können auch während des Verfahrens aus Rohprodukten gebildet werden.

Bevorzugte Beispiele für Organosiliciumverbindungen (A) sind lineare Trimethylsilyl- oder Hydroxy-Dimethylsilyl-endständige Polydimethylsiloxane, wie z.B
Öle der Viskosität 50 mPas mit
96,5 Mol% (CH₃)₂SiO_{2/2} und 3, 5 Mol% (CH₃)₃SiO_{1/2} oder
96,5 Mol% (CH₃)₂SiO_{2/2} und 3,5 Mol% (CH₃)₂(OH)SiO_{1/2};
Öle der Viskosität 100 mPas mit
98 Mol% (CH3)₂SiO_{2/2} und 2 Mol% (CH3)₃SiO_{1/2} oder
98 Mol% (CH₃)₂SiO_{2/2} und 2 Mol% (CH3)₂(OH)SiO_{1/2};
Öle der Viskosität 1000 mPas mit
99,2 Mol% (CH₃)₂SiO_{2/2} und 0,8 Mol% (CH₃)₃SiO_{1/2} oder
99,2 Mol% (CH₃)₂SiO_{2/2} und 0,8 Mol% (CH₃)₂(OH)SiO_{1/2};
Öle der Viskosität 12500 mPas mit
99,63 Mol% (CH₃)₂SiO_{2/2} und 0,37 Mol% (CH₃) ₃SiO_{1/2} oder
9 9, 63 Mol% (CH₃)₂SiO_{2/2} und 0, 37 Mol% (CH₃) ₂(OH) SiO_{1/2};
Öle der Viskosität 100000 mPas mit
99,81 Mol% (CH₃)₂SiO_{2/2} und 0, 19 Mol% (CH₃) ₃SiO_{1/2} oder
99, 81 Mol% (CH₃)₂SiO_{2/2} und 0, 19 Mol% (CH₃) ₂ (OH) SiO_{1/2}.

Bevorzugte Beispiele für harzartige Organosiliciumverbindungen (A) sind Methyl-Ethoxy-Harze, z.B. der Formel CH₃Si(OC₂H₅)_{0,8}(O)_{1,1}; Methylharze, z.B. mit 80 Mol% CH₃SiO_{3/2} und 20 Mol% (CH₃)₂SiO_{2/2} und einer Molmasse von ca. 5000g/Mol oder 98 Mol% CH₃SiO_{3/2} und 2 Mol% (CH₃)₂SiO_{2/2} und einer Molmasse von ca. 5000g/Mol.

Falls die Organosiliciumverbindung (A) selbst als Emulgator wirkt, dann können Organosiliciumverbindung (A) und Emulgator (B) identisch sein. Dann kann auf den Zusatz von separatem Emulgator (B) verzichtet werden.

Bei dem Bestandteil (B) der Emulsionen handelt es sich bevorzugt um kommerziell erwerbbare und gut untersuchte Emulgatoren, wie z.B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Prozent Ethylenoxidgehalt; ionische Emulgatoren; wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; Phosphatester; Organosiliciumverbindungen (A), die Einheiten der allgemeinen Formel I aufweisen, bei denen X einen Rest der allgemeinen Formel II bedeutet und c mindestens 1 ist.

Wie auf dem Gebiet der Emulgatoren wohl bekannt, können die Gegenionen im Falle von anionischen Emulgatoren Alkalimetalle, Ammoniak oder substituierte Amine, wie Trimethylamin oder Triethanolamin, sein. Normalerweise sind Ammonium-, Natrium- und Kaliumionen bevorzugt. Im Falle von kationische Emulgatoren ist das Gegenion ein Halogenid, Sulfat oder Methylsulfat. Chloride sind die zumeist industriell verfügbaren Verbindungen.

Die obengenannten Fettstrukturen stellen üblicherweise die lipophile Hälfte der Emulgatoren dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Alkylgruppen können dabei cyclisch, linear oder verzweigt sein. Andere mögliche Emulgatoren sind Sorbitolmonolaurat-Ethylenoxidkondensate; Sorbitolmonomyristat-Ethylenoxidkondensate; Sorbitolmonostearat-Ethylenoxidkondensate; Dodecylphenol-Ethylenoxidkondensate; Myristylphenol-Ethylenoxidkondensate; Octylphenyl-Ethylenoxidkondensate; Stearylphenol-Ethylenoxidkondensate; Laurylakohol-Ethylenoxidkondensate; Stearylalkohol-Ethylenoxidkondensate; Decylaminobetain; Cocoamidsulfobetain; Olylamidobetain; Cocoimidazolin; Cocosulfoimidazolin; Cetylimidazolin; 1-Hydroxyethyl-2-heptadecenylimidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natrium- oder Kaliummyristat.

Ebenso können bekanntermaßen anorganische Feststoffe als Emulgatoren (B) eingesetzt werden. Dies sind z.B. Kieselsäuren oder Bentonite wie in EP 1017745 A oder DE 19742759 A beschrieben.

Bevorzugt sind die nicht ionischen Emulgatoren.
Der Bestandteil (B) kann aus einem o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen LösungsmitteLn eingesetzt werden.

Emulgatoren (B) werden in Mengen von vorzugsweise 0, 1 bis 60 Gew.-%, besonders bevorzugt 1 bis 30 Gew.-%, jeweils bezogen auf das Gesamtgewicht an Organosiliciumverbindungen. (A) eingesetzt.

Zwischen dem zweiten und dritten Rotor Stator Mischer, sowie nach dem dritten Mischer können neben Wasser und Emulgatoren weitere Zusatzstoffe (Z), wie Silane, Säuren, Laugen, Biozide, Verdicker, Kieselsäuren und wasserlösliche Polysiloxane zugegeben werden.

Beispiele für Silane sind Vinyltris(methoxyethoxy)si lan, Tetraethoxysilan, anhydrolysiertes Tetraethoxysilan, Methyltriethoxysilan, anhydrolysiertes Methyltriethoxysilan, Aminoethylaminopropyltrimethoxysilan, Aminoethylaminopropyl(methyl)dimethoxysilan.

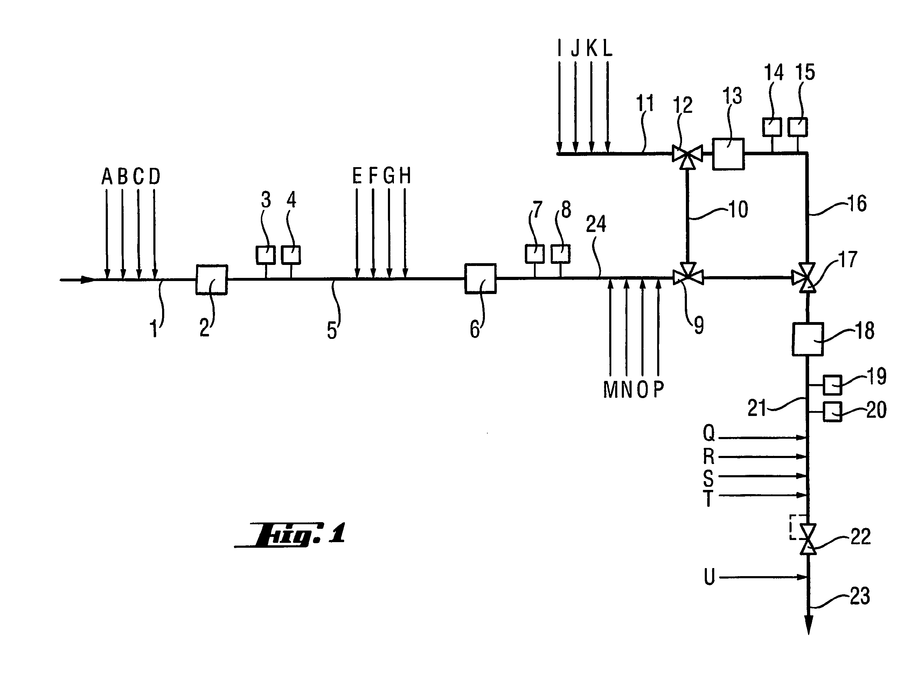

Das Verfahren wird beispielhaft anhand Figur 1 erläutert. Durch die Zuleitungen A, B, C, D werden mindestens ein Emulgator (B) oder eine Lösung eines Emulgators (B) und gegebenenfalls Wasser (C), gegebenenfalls ein oder mehrere Organosiliciumverbindungen(A) und Zusatzstoffe (Z) in die Zuleitung 1 kontinuierlich dosiert. In der Zuleitung 1 kann gegebenenfalls ein statisches Mischelement eingebaut sein um die Vermischung der Komponenten vor dem ersten hochscherenden Mischer 2 zu verbessern. Nach dem ersten Mischer 2 wird eine steife Phase erzeugt. Nach dem Mischer 2 sind ein Temperaturfühler 3 und ein Drucksensor 4 in die Leitung 5 eingebaut. Die vorgegebene Temperatur und der vorgegebene Druck in der Leitung 5 werden durch das Druckhalteventil 22 und die Drehzahl des hochscherenden Mischers 2 festgelegt. Die Temperatur wird durch die Temperatur der Rohstoffe, die je nach Vorgabe temperiert werden, und durch die Drehzahl des Mischers geregelt. In die Zuleitung 5 können wieder kontinuierlich ein oder mehrere Emulgatoren (B), ein oder mehrere Organosiliciumverbindungen (A), Wasser (C) und Zusatzstoffe (Z) zugegeben werden. Auch kann die Mischung bzw. feste Phase ohne Dosierung in den zweiten hochscherenden Mischer 6 überführt werden. Die Temperatur nach Mischer 6 wird durch den Temperaturfühler 7 gemessen und mit der Temperatur der Rohstoffe und der Drehzahl des Mischers 6 geregelt. Der Druck nach Mischer 6 wird durch den Drucksensor 8 gemessen und mit dem Druckhalteventil 22 sowie der Drehzahl des Mischers 6 geregelt. Nach dem Mischer 6 können wieder ein oder mehrere Emulgatoren (B), ein oder mehrere Organosiliciumverbindungen (A), Wasser (C) und Zusatzstoffe (Z) dosiert werden. Anschließend kann das Produkt in Leitung 24 über ein optional vorhandenes Ventil 9 und eine optional vorhandene Leitung 10 zum Mischer 13 geleitet werden oder weiter in Leitung 24 über ein optional vorhandenes Ventil 17 dem hochscherenden Mischer 18 zugeführt werden. Auch hier können vor Mischer 13 Rohstoffe dosiert werden. Die Temperaturen und Drücke nach Mischer 13 und Mischer 18 werden wie vorher beschrieben von den Temperaturreglern 14 und 19 und den Ducksensoren 15 und 20 erfasst und wie vorher beschrieben geregelt. Wird der Weg des Produkts über Leitung 10 nicht genutzt, können im Mischer 13 Vormischungen oder Voremulsionen auf die beschriebene Weise hergestellt werden und dem Produkt vor Mischer 18 zugeführt werden. Die Temperatur und Druckregelung läuft analog . Nach Mischer 18 können weitere Emulgatoren (B), Organosiliciumverbindungen (A), Wasser (C), Zusatzstoffe (Z) zugegeben werden. Desweiteren besteht die Möglichkeit nach dem Druckhalteventil 22 die Emulsion weiter mit Wasser zu verdünnen, bevor das fertige Produkt in einen Tank oder ein Verkaufsgebinde gefüllt wird.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1: Herstellung einer klaren Emulsion eines aminofunktionellen Polysiloxans.

Dem Mischer 2 (4000 UPM) werden 16,25% aminofunktionelles Siliconöl (Wacker® Finish WR 1300) mit einer Temperatur von 40°C (die Temperatur wird auf ± 2 K geregelt), 1,60% Isotridecylalkoholethoxylat mit durchschnittlich 8 EO (Arlypon® IT 8), 4,14% Isotridecylalkoholethoxylat mit durchschnittlich 5 EO (Lutensol® TO 5), 0,2% Essigsäure (80%ig) und 3,93% VE-Wasser (Temperatur 12°C, die Temperatur wird auf ± 2 K geregelt ) zugeführt. Das Druckhalteventil 22 wird auf 4,5 bar eingestellt. Zum Mischer 6 (3000 UPM) werden 3,6% vollentsalztes Wasser (VE-Wasser) (12°C, die Temperatur wird auf + 2 K geregelt) dosiert. Mischer 13 wird nicht verwendet, das Produkt wird nach Mischer 6 dem Mischer 18 zugeführt. Nach Mischer 6 werden 66,9% VE-Wasser (12°C) und Konservierungsmittel 0,08% (Kathon® LXE) zugegeben und Mischer 18 zugeführt (3000 UPM). Nach Mischer 18 werden 3,5% Glycerin dosiert.

Durch die gewählten Temperaturen und Prozessparameter ergibt sich nach Mischer 2 ein Druck von 3 bar und eine Temperatur von 43,5°C, nach Mischer 6 ein Druck von 3,1 bar und eine Temperatur von 50°C nach Mischer 18 ein Druck von 4,5 bar und eine Temperatur von 23°C. Diese Prozessparameter werden über ein Prozessleitsystem kontrolliert, dokumentiert und gesteuert und führen zu einer klaren Siliconemulsion mit einer Teilchengröße von 20 nm und einer Trübung von 10 ppm.
Die Emulsion bleibt bei einer Lagertemperatur von 50°C über mehrere Monate stabil.

### Vergleichsbeispiel 1 b:

Wählt man die analogen Prozessbedingungen wie unter Beispiel 1 angegeben, führt aber den Prozess nicht erfindungsgemäß durch, sondern dosiert das aminofunktionelle Siliconöl bei Raumtemperatur (20°C) so führt dies zu einem deutlichen Temperaturabfall am Mischer 2 (20 °C) und Mischer 6 (25°C), der Druck bleibt weitgehend unverändert.
Das hergestellte Produkt zeigt eine deutlich größere Teilchengröße von 42 nm und eine Trübung von 23 ppm. In der Lagerung bei 50°C zeigt sich nach 3 Wochen eine Phasenseparation.

### Beispiel 2: Herstellung einer Polyvinylalkohol stabilisierten Siliconharzemulsion

Zum Mischer 2 (4000 UPM) werden 35,3% Polyvinylalkohollösung (10%ig) (25°C, die Temperatur wird auf ± 2 K konstant gehalten ) und 48,4 % einer Mischung aus Siliconharz (80 Mol% T-Einheiten 20 Mol% D-Einheiten, 20°C) mit einem- OH terminierten Polydimethylsiloxan der Viskosität 30 mPas und 4,7% VE-Wasser (12°C) dosiert. Diese Mischung wird dem Mischer 6 zugeführt und im Mischer 6 (3000 UPM) nochmals geschert. Nach dem Mischer 6 werden 11,36% VE-Wasser (12°C) und 0,24% Konservierer (Rocima® 523) zugesetzt und die Mischung dem Mischer 18 (3000 UPM) zugeführt. Das Druckhalteventil 22 wird auf 2 bar eingestellt. Diese Prozessparameter führen nach Mischer 2 zu einem Druck von 2 bar und einer Temperatur von 33°C, nach Mischer 6 werden ebenfalls 2 bar und 35°C gemessen und nach Mischer 18 werden 2 bar und 36°C registriert. Mit den vorgegebenen Prozessparametern wird eine Emulsion erzeugt, die bei Raumtemperatur eine Lagerstabilität von 1 Jahr ohne Phasentrennung besitzt.

### Vergleichsbeispiel 2b

Werden obige Prozessparameter ansonsten nicht verändert nur die Temperatur der Polyvinylalkohollösung nicht kontrolliert und nicht erfindungsgemäß auf 50 °C erhöht wird, erhöht sich die Temperatur nach Mischer 2 auf etwa 45 °C und entsprechend die Temperatur nach Mischer 6 und 22 auf 46°C. Das erhaltene Produkt zeigt schon nach 2 Wochen Lagerung bei Raumtemperatur eine deutliche Abscheidung von Silicon harz.

### Beispiel 3: Polykondensation in Emulsion

Dem Mischer 2 (4000UPM) werden 34,88% eines OH funktionellen Polydimethylsiloxans (15°C) mit einer Viskosität von etwa 30 mPas und 3,7% eines Isotridecylalkoholethoxylates mit 10 EO Einheiten (80%ige Lösung in Wasser) und 4,5% VE-Wasser und 3% Dodecylbenzolsulfonsäure zugeführt. Diese Mischung wird dem Mischer 6 (3000 UPM) zugeführt und dort nochmals durchgearbeitet. Die Mischung wird Mischer 18 zugeführt und vor dem Mischer 18 (3000 UPM) werden 40,43% VE-Wasser und 0,08% Konservierer (Kathon® LXE) dosiert.
Das Druckhalteventil 22 wird auf 3 bar eingestellt.
Diese Mischung wird anschließend für eine mittlere Verweilzeit von 7,5 Stunden in einem Behälter gelagert. Dort findet eine sauer katalysierte Kondensation des Polydimethylsiloxans statt.

Nach 7,5 Stunden werden 2,1% TriethanoL amin (80%ig) und 11,27% VE-Wasser zugegeben. Damit wird die Säure neutralisiert und die Reaktion beendet.
Bei dem erfindungsgemäß geführten Verfahren werden nach Mischer 2, 3 bar und 26°C gemessen. Nach Mischer 6 werden 2 bar und 37°C erreicht und nach Mischer 18, 27°C. Dies führt zu einer feinteiligen Siliconemulsion (150 nm) mit einer Ölviskosität von 100.000 mPas. Die Lagerstabilität der Emulsion ist länger als 2 Jahre.

### Vergleichsbeispiel 3b

Werden in dem nicht erfindungsgemäßen Verfahren alle Parameter unverändert belassen und die Temperatur des Polydimethylsiloxans bei 25°C gefahren, so ergibt sich eine Emulsion, welche eine vergleichbare Teilchengröße (154 nm), aber nur eine zu niedrige Ölviskosität von 60.000 mPas hat.

## Patentansprüche

1. Verfahren zur kontinuierlichen Herstellung von wässrigen Emulsionen, die Organosiliciumverbindung (A), Emulgator (B) und Wasser (C) umfassen, bei dem jeweils ein Teil der Komponenten Organosiliciumverbindung (A), Emulgator (B) und Wasser (C) kontinuierlich einem ersten hochscherenden Mischer zugeführt werden in welchem eine hochviskose Phase einer Siliconemulsion gebildet wird,
und in einem zweiten hochscherenden Mischer weitere Komponenten, die ausgewählt werden aus Organosiliciumverbindung (A), Emulgator (B) und Wasser (C) zugemischt werden,
wobei das Verfahren über die Drücke und Temperaturen geregelt wird, die direkt nach den Mischern gemessen werden.

2. Verfahren nach Anspruch 1, bei dem die Regelung des Drucks durch eine Druckhaltung nach dem zweiten hochscherenden Mischer und durch die Drehzahl der hochscherenden Mischer erfolgt.

3. Verfahren nach Anspruch 1 und 2, bei dem die Regelung der Temperatur durch die Temperatur der Rohstoffe und die Drehzahl der Mischer erfolgt.

4. Verfahren nach Anspruch 1 bis 3, bei dem die Organosiliciumverbindung (A) bei 25°C flüssig ist und Viskositäten von 0,5 bis 500 000 mPa·s aufweist.

## Claims

1. Process for the continuous preparation of aqueous emulsions which comprise organosilicon compound (A), emulsifier (B) and water (C), in which in each case a part of the components organosilicon compound (A), emulsifier (B) and water (C) is fed continuously to a first high-shear mixer in which a highly viscous phase of a silicone emulsion is formed,
and, in a second high-shear mixer, further components which are selected from organosilicon compound (A), emulsifier (B) and water (C) are admixed,
the process being regulated by means of the pressures and temperatures, which are measured directly after the mixers.

2. Process according to Claim 1, in which the regulation of the pressure is effected by pressure maintenance after the second high-shear mixer and by the speed of the high-shear mixers.

3. Process according to Claims 1 and 2, in which the regulation of the temperature is effected by the temperature of the raw materials and the speed of the mixers.

4. Process according to any of Claims 1 to 3, in which the organosilicon compound (A) is liquid at 25°C and has viscosities of from 0.5 to 500 000 mPa·s.

## Revendications

1. Procédé pour la préparation en continu d'émulsions aqueuses qui comprennent un composé organosilicié (A), un émulsifiant (B) et de l'eau (C), dans lequel à chaque fois une partie des composants de type composé organosilicié (A), émulsifiant (B) et eau (C) sont introduits en continu dans un premier mélangeur à cisaillement élevé, dans lequel est formée une phase hautement visqueuse d'une émulsion de silicone,
et d'autres composants, choisis parmi le composé organosilicié (A), l'émulsifiant (B) et l'eau (C) sont mélangés dans un deuxième mélangeur à cisaillement élevé,
le procédé étant régulé via des pressions et des températures qui sont mesurées directement en aval des mélangeurs.

2. Procédé selon la revendication 1, dans lequel la régulation de la pression est réalisée par un dispositif de maintien de la pression en aval du deuxième mélangeur à cisaillement élevé et par la vitesse de rotation du mélangeur à cisaillement élevé.

3. Procédé selon les revendications 1 et 2, dans lequel la régulation de la température est réalisée par la température des matières premières et la vitesse de rotation des mélangeurs.

4. Procédé selon les revendications 1 à 3, dans lequel le composé organosilicié (A) est liquide à 25°C et présente des viscosités de 0,5 à 500 000 mPa.s.
